# DEMANDE DE BREVET EUROPEEN

(11) **EP 1 167 116 A1**
(43) Date de publication de la demande: **02.01.2002**
(21) Numéro de dépôt: 01401663.8
(22) Date de dépôt: 22.06.2001
(51) Int. Cl.: B60N 2/68, B60N 2/427

(54) **Dossier de siège de véhicule**

(30) Priorité: 27.06.2000 FR 0008235
(71) Demandeur: Centre d'Etudes et Recherche pour l'Automobile ( CERA), 51100 Reims (FR)
(72) Inventeur: Le Gall, Francois, 02130 Coulonges (FR)
(74) Mandataire: Derambure, Christian

(57) **Abrégé**

L'invention concerne un dossier de siège de véhicule, comprenant une armature (2) et une structure de support de garnissage.

Ladite structure de support de garnissage comprend un plateau (1 ; 1') généralement rigide supporté à partir de ladite armature par des organes de liaison (8 ; 8') susceptibles de s'allonger avec absorption d'énergie en cas d'un déplacement du plateau par rapport à l'armature supérieur à un seuil prédéterminé.

Application aux sièges de véhicules automobiles.

## Description

La présente invention concerne un dossier de siège de véhicule, notamment automobile, et plus particulièrement un tel dossier comprenant une armature et une structure de support de garnissage.

D'une manière générale les sièges automobiles comprennent principalement une armature rigide, qui supporte les garnissages de sièges, constitués la plupart du temps de mousse recouverte de textile ou de cuir, par l'intermédiaire de nappes plus ou moins élastiques généralement planes, métalliques ou textiles, tendues entre les montants desdites armatures par l'intermédiaire d'une pluralité de ressorts de traction.

De tels agencements procurent un bon niveau de confort mais réagissent globalement comme des ressorts parfaits si l'on néglige les quelques frottements et le faible hystérésis des composants couramment employés.

La plupart des sièges actuels comporte une armature de dossier en forme de U inversé dont les branches sont reliées au système de réglage en inclinaison du dossier par rapport à l'armature d'assise. La barre horizontale du U formant traverse située sensiblement au niveau des épaules supporte ou constitue en tout ou pour partie, l'armature en zone appui-tête. Un tel agencement ne permet pas l'implantation des nappes de soutien précitées dans cette zone et l'on y trouve donc généralement une faible épaisseur de mousse directement en appui sur ladite traverse.

D'autre part, des études ergonomiques montrent qu'en position optimum de conduite, la tête du conducteur ne repose jamais sur le coussin d'appui-tête, contrairement au bas de son dos sur le coussin de dossier. Il en résulte qu'en cas de chocs par l'arrière du véhicule, après s'être violemment enfoncées dans le dossier du siège sous l'effet de l'accélération transmise au siège par l'intermédiaire du châssis, les différentes parties du corps de l'occupant dudit siège rebondissent avec une violence proportionnelle à la raideur du garnissage qu'elles contactent ou viennent contacter.

On comprendra que la partie supérieure du torse de l'occupant rebondira violemment et prématurément du fait de la faible épaisseur du garnissage dans cette zone. A contrario, la tête dudit occupant, qui n'était pas en contact avec le coussin d'appui-tête rebondira plus tardivement et avec plus ou moins de violence en fonction de la souplesse de l'armature dudit appui-tête et de la conception de son garnissage.

Ce déphasage de rebond tête / torse qui se traduit par un déplacement relatif entre les vertèbres cervicales est identifié comme étant la principale cause de lésions en cas de chocs par l'arrière d'un véhicule par un autre avec une vitesse différentielle inférieure à 20 km/h.

Il en résulte donc que la sécurité peut être améliorée si l'on peut synchroniser les déplacements de la tête par rapport au torse pendant toutes les phases du choc.

La présente invention vise à pallier ces inconvénients.

Plus particulièrement, l'invention a pour but de fournir un dossier de siège de véhicule de sécurité.

Encore plus particulièrement, l'invention a pour but de fournir un dossier de siège de véhicule limitant le rebond du torse en cas de choc arrière.

A cet effet, l'invention a pour objet un dossier de siège de véhicule, notamment automobile, comprenant une armature et une structure de support de garnissage, ladite structure de support de garnissage comprenant un plateau généralement rigide supporté à partir de ladite armature par des organes de liaison susceptibles de s'allonger avec absorption d'énergie en cas d'un déplacement du plateau par rapport à l'armature supérieur à un seuil prédéterminé, ledit plateau comprenant des moyens de réception d'un appui-tête.

Selon un mode de réalisation, ledit plateau est réalisé d'une seule pièce avec une armature d'appui-tête.

Ledit plateau peut comprendre des zones de déformation agencées pour être déformées par des moyens de commande montés sur ladite armature de siège.

Ledit plateau peut également comprendre des zones de déformation agencées pour coopérer avec des parties de ladite armature de siège de manière à se déformer lorsque le déplacement du plateau par rapport à l'armature dépasse une valeur prédéterminée.

On peut plus particulièrement prévoir que lesdites zones de déformation comprennent les ailes latérales du plateau, aptes à coopérer avec les montants latéraux de ladite armature de siège.

Lesdits organes de liaison peuvent comprendre un crochet monté sur ladite structure, respectivement sur ladite armature, engagé dans un orifice d'une pièce plate monté sur ladite armature, respectivement sur ladite structure, ladite pièce plate comportant une ligne de déchirure partant dudit orifice dans la direction de la traction de la structure sur l'armature.

Plus particulièrement, ladite pièce plate peut être réalisée en matière plastique et ladite ligne de déchirure peut être formée d'une rainure formée dans l'épaisseur de ladite pièce.

Ladite pièce plate peut comprendre un renfort à l'extrémité de ladite ligne de déchirure opposée audit orifice.

Le dossier de siège selon l'invention peut en outre comprendre des moyens élastiques en série avec lesdits organes susceptibles de s'allonger.

Des moyens de blocage desdits moyens élastiques dans leur état contraint peuvent alors être prévus.

On observera que l'utilisation de l'invention ne nécessite pas de modifications profondes des sièges actuels qui comportent déjà des interfaces pour les ressorts de nappes et qu'il suffira d'en changer le nombre et l'emplacement pour optimiser le bon fonctionnement de l'ensemble.

De plus, dans le cas d'une application de l'invention sur armature de siège existante, il sera possible d'obtenir le jeu nécessaire entre le plateau et la barre transversale de l'armature du dossier en jouant sur la position nominale en inclinaison du dossier et en compensant au niveau de la forme du plateau, par un déport vers l'avant, pour retrouver une position nominale de conduite.

On décrira maintenant, à titre d'exemples non limitatifs, des modes de réalisation particuliers de l'invention, en référence aux dessins schématiques annexés dans lesquels :
- la figure 1 est une vue en perspective d'un premier mode de réalisation du plateau d'un dossier de siège de véhicule automobile ;
- la figure 2 est une vue en perspective d'un deuxième mode de réalisation de ce plateau ;
- la figure 3 est une demi coupe horizontale du dossier de ce siège ;
- la figure 4 est une vue de détail en perspective d'un élément de structure de support du plateau ;
- la figure 5 est une vue en coupe selon la ligne V-V de la figure 4 ;
- la figure 6 est une vue similaire à la figure 3 d'un autre mode de réalisation ; et
- la figure 7 est une vue de détail d'un agencement susceptible d'être utilisé dans le dossier de la figure 6.

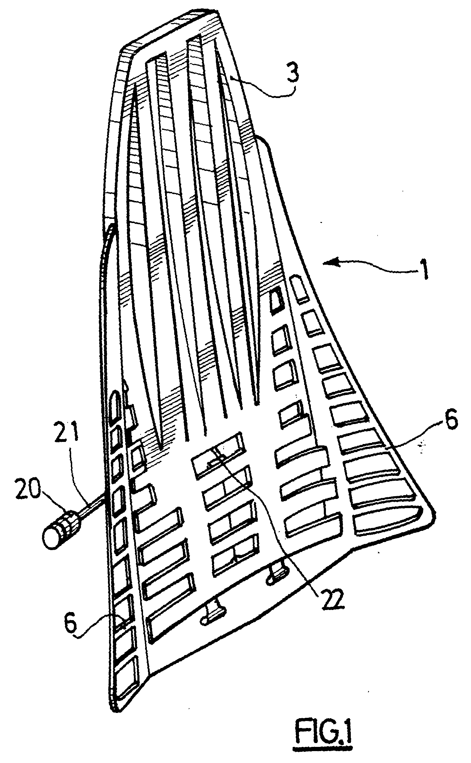

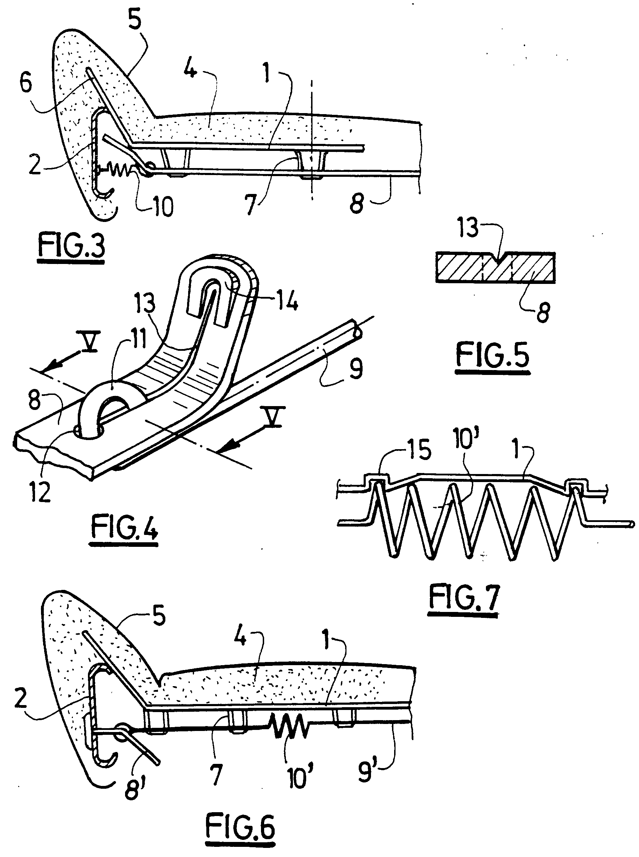

On voit à la figure 1 un plateau 1 de support de garnissage pour dossier de siège de véhicule automobile. Ce plateau est monté comme cela sera décrit ci-après sur la structure du dossier, cette dernière comprenant deux montants latéraux 2 (figures 3 et 6) réunis par une traverse supérieure pour former une armature en U inversé.

Le plateau 1 comporte une extension vers le haut 3 formant une armature d'appui-tête. L'ensemble constitué par le plateau 1 et l'armature du dossier est muni de façon connue d'une garniture en mousse 4 et d'un revêtement extérieur 5, par exemple textile.

Les ailes 6 du plateau 1 sont en appui sur les montants latéraux 2 de l'armature du siège et sont reliées à la partie centrale du plateau par une zone élastique de sorte que, lorsque le plateau 1 recule par rapport à l'armature comme cela se produit lors d'un choc arrière, les ailes 6 se referment, maintenant ainsi latéralement l'occupant du siège. Les zones élastiques de liaison peuvent d'ailleurs être prévues pour se déformer plastiquement en cas de choc violent de manière à absorber une partie de l'énergie.

Le plateau 1 comporte sur sa face arrière des saillies 7 formant des entretoises dans lesquelles coulissent des sangles 8. Les extrémités des sangles 8 sont reliées aux montants latéraux 2 de l'armature du siège par des tringles 9 pouvant comporter une partie 10 formant ressort.

Les extrémités des tringles 9 forment un crochet 11 engagé dans un orifice 12 de la sangle 8. L'orifice 12 se prolonge en direction de l'extrémité de la sangle 8 par une rainure 13 à section en V formant une ligne de déchirure se terminant par un renfort 14 évitant en cas de choc suffisamment violent une déchirure complète de la sangle 8.

Par conséquent, en cas de choc, le plateau 1 recule et le ressort 10 commence par se tendre puis, si la traction est maintenue par la violence du choc, la ligne 10 se déchire jusqu'au renfort 14 en absorbant une partie de l'énergie, limitant ainsi l'effet de rebond.

Dans le mode de réalisation des figures 6 et 7, une tringle 9' est munie d'un ressort central 10' et reçoit les entretoises 7. Les extrémités de la tringle 9' sont reliées comme précédemment à des tronçons de sangle 8' dont une extrémité est fixée aux montants 2 de l'armature du siège et dont l'autre extrémité est munie d'une ligne de déchirure.

Cet agencement fonctionne comme celui de la figure 3.

On a prévu à la figure 7, au dos de la plaque 1, des formes d'encliquetage qui reçoivent les extrémités du ressort 10' lorsque celui-ci est suffisamment distendu sous l'effet d'un choc violent. Une partie de l'énergie du choc est donc emmagasinée dans le ressort sous la forme d'énergie potentielle et ne peut pas être restituée au plateau 1. On limite ainsi également l'effet de rebond.

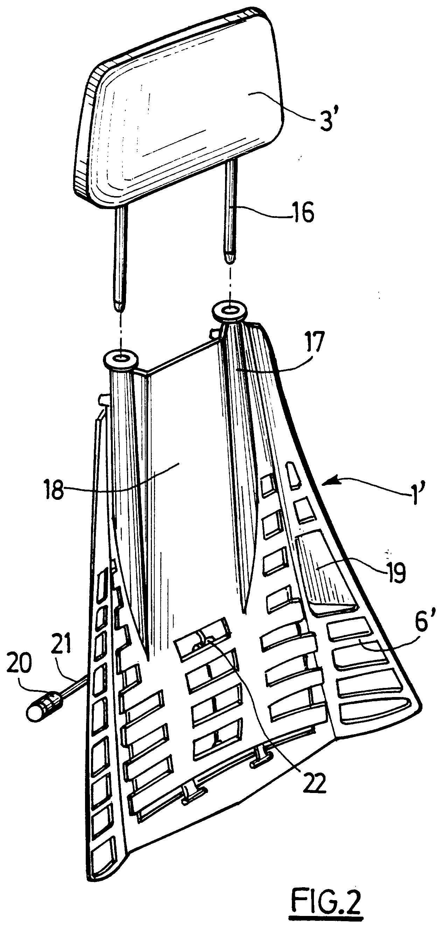

La figure 2 illustre une variante 1' du plateau de la figure 1.

L'armature 3' de l'appui-tête est ici rapportée à l'aide de deux broches 16 engagées dans des gaines 17 réalisées d'une seule pièce avec la partie basse 18 du plateau 1'. L'appui-tête peut ainsi être réglable en hauteur.

Par ailleurs, les ailes 6' du plateau 1' sont ici munies de renfoncements 19 formant des cavités de logement pour des coussins gonflables de sécurité.

Dans les deux cas (figures 1 et 2), il est prévu un bouton de réglage 20 de la convexité du plateau, et donc du dossier.

A cet effet, le bouton 20. est monté sur l'armature du siège et est relié par une tige 21 à une came 22 en appui sur le dos du plateau. Ainsi, une rotation du bouton 20 entraîne une modification de la convexité du plateau.

## Revendications

1. Dossier de siège de véhicule, notamment automobile, comprenant une armature (2) et une structure de support de garnissage, ladite structure de support de garnissage comprenant un plateau (1; 1') généralement rigide supporté à partir de ladite armature par des organes de liaison (8 ; 8') susceptibles de s'allonger avec absorption d'énergie en cas d'un déplacement du plateau par rapport à l'armature supérieur à un seuil prédéterminé, **caractérisé en ce que** ledit plateau (1') comprend des moyens de réception (17) d'un appui-tête (3').

2. Dossier de siège selon la revendication 1, dans lequel ledit plateau (1) est réalisé d'une seule pièce avec une armature d'appui-tête (3).

3. Dossier de siège selon l'une quelconque des revendications 1 ou 2, dans lequel ledit plateau (1 ; 1') comprend des zones de déformation agencées pour être déformées par des moyens de commande (20) montés sur ladite armature de siège.

4. Dossier de siège selon l'une quelconque des revendications 1 à 3 dans lequel ledit plateau (1 ; 1') comprend des zones de déformation agencées pour coopérer avec des parties (2) de ladite armature de siège de manière à se déformer lorsque le déplacement du plateau par rapport à l'armature dépasse une valeur prédéterminée.

5. Dossier de siège selon la revendication 4, dans lequel lesdites zones de déformation (6 ; 6') comprennent les ailes latérales du plateau, aptes à coopérer avec les montants latéraux (2) de ladite armature de siège.

6. Dossier de siège selon l'une quelconque des revendications 1 à 5, dans lequel lesdits organes de liaison comprennent un crochet (11) monté sur ladite structure (1), respectivement sur ladite armature (2), engagé dans un orifice (12) d'une pièce plate (8 ; 8') monté sur ladite armature ((2), respectivement sur ladite structure (1'), ladite pièce plate comportant une ligne de déchirure (13) partant dudit orifice dans la direction de la traction de la structure sur l'armature.

7. Dossier de siège selon la revendication 6, dans laquelle ladite pièce plate (8 ; 8') est réalisée en matière plastique et ladite ligne de déchirure est formée d'une rainure (13) formée dans l'épaisseur de ladite pièce.

8. Dossier de siège selon l'une quelconque des revendications 6 à 7, dans lequel ladite pièce plate (8 ; 8') comprend un renfort (14) à l'extrémité de ladite ligne de déchirure (13) opposée audit orifice (12).

9. Dossier de siège selon l'une quelconque des revendications 6 à 8, comprenant en outre des moyens élastiques (10 ; 10') en série avec lesdits organes (8; 8') susceptibles de' s'allonger.

10. Dossier de siège selon la revendication 9, comprenant des moyens de blocage (15) desdits moyens élastiques (10 ; 10') dans leur état contraint.
